# EUROPEAN PATENT SPECIFICATION

(11) **EP 3 513 691 B1**
(45) Date of publication and mention of the grant of the patent: **11.08.2021**
(21) Application number: 18165643.0
(22) Date of filing: 04.04.2018
(51) Int. Cl.: A47J 31/36

(54) **AUTOMATIC COMPRESSING, REJECTING AND BREWING DEVICE AND METHOD FOR CAPSULE COFFEEMAKERS**
AUTOMATISCHE KOMPRIMIER-, AUSSONDERUNGS- UND BRÜHVORRICHTUNG UND VERFAHREN FÜR KAPSELKAFFEEMASCHINEN
DISPOSITIF ET PROCÉDÉ AUTOMATIQUES DE COMPRESSION, DE REJET ET D'INFUSION POUR CAFETIÈRES À CAPSULES

(30) Priority: 19.01.2018 CN 201810054714
(43) Date of publication of application: 24.07.2019
(73) Proprietor: Jiangsu Kunge Intelligent Technology Co., Ltd, Jiangsu Province 224500 (CN)
(72) Inventor: SHI, Junda, Yuyao City, Zhejiang (CN); SHI, Zhongyu, Yuyao City, Zhejiang (CN); LIU, Shukuo, Yuyao City, Zhejiang (CN); LI, Shunhua, Yuyao City, Zhejiang (CN)
(74) Representative: Herrero & Asociados, S.L.

(56) References cited:
- EP-A1- 1 743 553
- EP-A2- 1 810 599
- WO-A1-2012/114218
- CN-U- 201 822 642

## Description

### TECHNICAL FIELD OF THE INVENTION

The present invention relates to the technical field of manufacturing of coffeemakers and in particular to an automatic compressing, rejecting and brewing device and method for capsule coffeemakers.

### BACKGROUND OF THE INVENTION

At present, there are usually following four means for the existing coffeemakers to realize compression or rejection of coffee pods or capsules:
1. the compression or rejection of coffee pods or capsules is realized by turning the handle by a hand in aid of driving by a connecting rod;
2. the compression or rejection of coffee pods or capsules is realized by driving by a motor and a worm;
3. the compression or rejection of coffee pods or capsules is realized directly by long-distance driving by a large piston, as shown in WO2012/114218A1, EP1810599A2 and EP1743553A1; and
4. the compression or rejection of coffee pods or capsules is realized by driving by a piston and a connecting rod, as shown in CN201822642U.

Among the above four means, the hand-operated mechanism is not so easy for the user to operate and has high cost in use; the way of driving by a motor will result in high manufacturing and use cost; and the mechanism of driving by a large piston and the mechanism of driving by a piston and a connecting rod have the disadvantages of long driving distance, low driving speed, large required driving force, poor running stability, and the like. compared with other hydraulic systems, on the basis of same cost, the system of the present invention can lengthen the movement distance, quicken the movement speed and reduce the amount of liquid to be filled, and is mechanically simple and easy to operate.

### DESCRIPTION OF THE INVENTION

An objective of the present invention is to provide an automatic compressing, rejecting and brewing device and method for capsule coffeemakers, which have the advantages of high running speed, high running stability, simple operation and low production cost, in order to solve the problems of complicated operation and low running speed in the prior art.

For this purpose, the present invention employs the following technical solutions. An automatic compressing, rejecting and brewing device for capsule coffeemakers is provided, comprising brackets arranged in parallel; a capsule container, a capsule clamping assembly and a compression mechanism are provided successively between the brackets, and a spring assembly connected to the compression mechanism is provided on each of the brackets; the compression mechanism comprises a first piston compression assembly, a piston rod and a second piston compression assembly, which are connected successively; the first piston compression assembly comprises a sealed chamber, a hot water intake chamber, a first piston chamber and a support rod assembly, which are connected successively; the sealed chamber is communicated with the hot water intake chamber, and a hot water inlet is formed on the hot water intake chamber; a first fluid inlet is formed at one end of the first piston chamber, a first piston connected to the piston rod is provided inside the first piston chamber, and connecting shafts are pairwise provided at the other end of the first piston chamber; the support rod assembly comprises a first support rod and a second support rod, each comprising a straight compression lever and a rotary support block arranged on one side of the straight compression lever; the connecting shafts are movably connected to the straight compression lever; each of the brackets is provided with a rotary limiting mechanism which comprises a limiting portion and a rotating portion connected together; during the movement of the first piston compression assembly toward the capsule container, the rotating portion of the rotary limiting mechanism rotates the first support rod and the second support rod upward, and the limiting portion of the rotary limiting mechanism supports and limits the first support rod and the second support rod; after the movement, the straight compression lever is in parallel to the movement direction of the first piston compression assembly; and the second piston compression assembly comprises a second piston chamber and a second piston provided in the second piston chamber, the second piston is connected to the piston rod, and a second fluid inlet is formed on the second piston chamber; and
the spring assembly comprises a first return spring and a second return spring arranged pairwise, one end of the first return spring is connected to the first piston compression assembly and the other end of the first return spring is arranged on the brackets, one end of the second return spring is connected to the second piston compression assembly and the other end of the second return spring is arranged on the brackets.

Preferably, the capsule container comprises a housing; an accommodating chamber, which is open to the outside, is provided at one end of the housing, and used for accommodating a coffee capsule; a number of sharp cones are provided on the bottom of the accommodating chamber; and a through coffee outlet is formed at the other end of the housing.

Preferably, the capsule clamping assembly is connected to the first piston compression assembly; the capsule clamping assembly comprises two clampers, which are arranged symmetrically; the clamper comprises a clamper body and a curved groove formed on one side of the clamper body, and the curved groove comprises a capsule sliding segment and a capsule clamping segment; and the clamper body is connected to the sealed chamber of the first piston compression assembly.

Preferably, rotating shafts are pairwise provided on the sealed chamber and movably connected to an upper end of the clamper body, and a lower end of the clamper body is connected to the sealed chamber by a limiting spring.

Preferably, an annular sealing member is provided on an inner wall of the sealed chamber, and an inner wall of the annular sealing member is connected to an outer wall of the housing in a sealed manner.

Preferably, a through hole communicated with the hot water intake chamber is formed on a bottom surface of the sealed chamber, and a number of sharp cones are uniformly distributed on the bottom surface of the sealed chamber between the through hole and the annular sealing member.

Preferably, each of the first support rod and the second support rod is provided with a rotary hook which is connected to the rotary support block by a connecting plate; during the return process of the first piston compression assembly, when the first support rod and the second support rod cannot rotate downward due to their own gravity, the rotary hook is in contact connection to the rotating portion, and the rotary hook enables the first support rod and the second support rod to rotate downward.

Preferably, first fluid and second fluid are filled to the first piston chamber and the second piston chamber respectively by the first fluid inlet and the second fluid inlet; and the first fluid and the second fluid are water or hydraulic oil.

The present invention further comprises an automatic compressing, rejecting and brewing method using the device described above, comprising the following steps:
a capsule is placed into a capsule groove from a capsule sliding segment of two clampers of a capsule clamping assembly, and clamped by a capsule clamping segment;
first fluid is supplied into a first piston chamber from a first fluid inlet on the first piston chamber in a first piston compression assembly, the first fluid drives a sealed chamber, a hot water intake chamber, the first piston chamber and a support rod assembly in the first piston compression assembly to move towards a capsule container and drives the capsule fixed in a capsule clamping assembly to separate from the capsule groove to go into the capsule container, and now the support rod assembly movably connected to the first piston chamber starts rotating under the effect of a rotary limiting mechanism, wherein the support rod assembly comprises a first support rod and a second support rod , each comprising a straight compression lever and a rotary support block arranged on one side of the straight compression lever; the connecting shafts are movably connected to the straight compression lever; each of the brackets is provided with a rotary limiting mechanism which comprises a limiting portion and a rotating portion connected together; during the movement of the first piston compression assembly toward the capsule container, the rotating portion of the rotary limiting mechanism rotates the first support rod and the second support rod upward, and the limiting portion of the rotary limiting mechanism supports and limits the first support rod and the second support rod;
second fluid is supplied into a second piston chamber from a second fluid inlet on the second piston chamber in a second piston compression assembly, the second fluid drives a second piston and a piston rod to move towards the capsule container, the second piston comes into contact with the straight compression lever and compresses the straight compression lever so that the sealed chamber is in sealed connection to the capsule container, and sharp cones on the bottom of the sealed chamber and on the bottom of the capsule container pierce the capsule;
hot water flows into the hot water intake chamber from a hot water inlet on a hot water intake chamber in the first piston compression assembly, and into the sealed chamber, the capsule and the capsule container, for making coffee;
at the end of making coffee, coffee flows out from a coffee outlet on the capsule container; when it is necessary to replace the capsule, second fluid inside the second piston chamber is released and the second piston is driven by a second return spring to return to its original position, and the first fluid inside the first piston chamber is released and the first piston compression assembly is driven by a first return spring to return to its original position, and during the return process, the support rod assembly in the first piston compression assembly rotates downward under the gravity; and
the sealed chamber is separated from the capsule container, the capsule automatically falls, a new capsule is placed in the capsule clamping assembly, and the above steps are repeated.

Preferably, during the return process of the first piston compression assembly when driven by the first return spring, when the support rod assembly in the first piston compression assembly cannot rotate downward due to its own gravity, rotary hooks are arranged on the first support rod and the second support rod and connected to the rotary support block by a connecting plate, so that, during the return process of the first piston compression assembly, the rotary hook is in contact connection to the rotary portion, and the rotary hook enables the first support rod and the second support rod to rotate downward.

Compared with the prior art, the present invention has the following technical effects.
1. In the automatic compressing, rejecting and brewing device and method for capsule coffeemakers of the present invention, a first piston compression assembly, a piston rod and a second piston compression assembly, which are connected together, are used, so that the capsule is automatically compressed by the coordination of the first piston compression assembly and the second piston compression assembly and the compression speed and the movement stability are both improved. Wherein, the first piston compression assembly moves toward the capsule container under the pressure from the first fluid to compress a capsule into the capsule container; the second piston in the second piston compression assembly pushes the piston rod to move towards the capsule container under the pressure from the second fluid; and the second piston comes into contact connection to the support rod assembly in the first piston compression assembly to further urge the first piston compression assembly to compress the capsule. That is, the automatic compression of a capsule is completed by the combination of the long-distance driving by the first piston and the short-distance boosting by the second piston. Meanwhile, the presence of the first piston and the support rod assembly shortens the movement distance of the second piston, and the movement speed and the movement stability are improved.
2. In the automatic compressing, rejecting and brewing device and method for capsule coffeemakers of the present invention, by providing a rotary hook on each of the first support rod and the second support rod, when the first support rod and the second support rod cannot rotate downward due to their own gravity, the rotary hook is in contact connection to the rotating portion, and the rotary hook enables the first support rod and the second support rod to rotate downward. The problem of unsuccessful return of the first piston compression assembly because the first support rod and the second support rod cannot fall due to external factors is avoided, and the movement precision of the device is improved.

### BRIEF DESCRIPTION OF THE DRAWINGS

To describe the technical solutions in the embodiments of the present invention or in the prior art more clearly, the accompanying drawings to be used in the description of the embodiments will be briefly described below. Apparently, the drawings described hereinafter are some of the embodiments of the present invention, and a person of ordinary skill in the art can obtain other drawings according to these drawings without any creative effort.
Fig. 1 is a first overall structure diagram of an automatic compressing, rejecting and brewing device for the capsule coffeemaker according to the present invention;
Fig. 2 is a second overall structure diagram of an automatic compressing, rejecting and brewing device for the capsule coffeemaker according to the present invention;
Fig. 3 is a sectional view of a connection structure of a capsule, a first piston compression assembly, a piston rod and a second piston compression assembly in the automatic compressing, rejecting and brewing device for the capsule coffeemaker according to the present invention;
Fig. 4 is a view of a connection structure of a capsule, a first piston compression assembly, a piston rod and a second piston compression assembly in the automatic compressing, rejecting and brewing device for the capsule coffeemaker according to the present invention;
Fig. 5 is an overall structure diagram of a bracket in the automatic compressing, rejecting and brewing device for the capsule coffeemaker according to the present invention; and
Fig. 6 is a view of a connection structure of the first piston compression assembly, the piston rod and the second piston compression assembly in the automatic compressing, rejecting and brewing device for the capsule coffeemaker according to the present invention.

### PREFERRED EMBODIMENT OF THE INVENTION

The technical solutions in the embodiments of the present invention will be clearly and completely described below with reference to the accompanying drawings in the embodiments of the present invention. Apparently, the embodiments described herein are merely a part but not all of the embodiments of the present invention.

An objective of the present invention is to provide an automatic compressing, rejecting and brewing device and method for capsule coffeemakers, which have the advantages of high running speed, high running stability, simple operation and low production cost, in order to solve the problems of complicated operation and low running speed in the prior art.

To make the objectives, features and advantages of the present invention more obvious and comprehensible, the present invention will be further described below in detail by specific implementations with reference to the accompanying drawings.

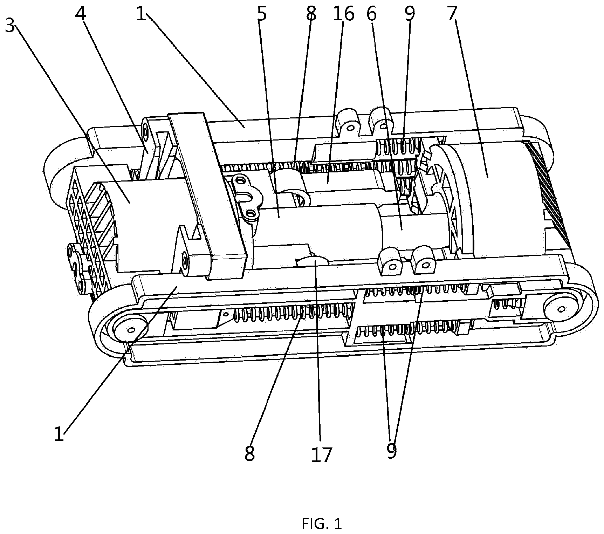

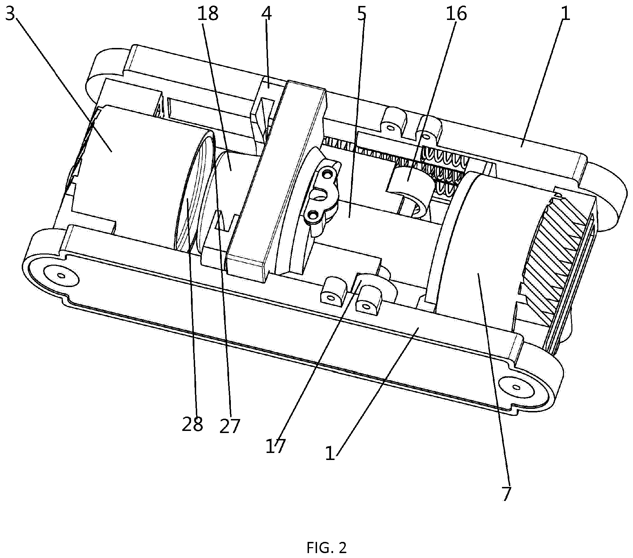

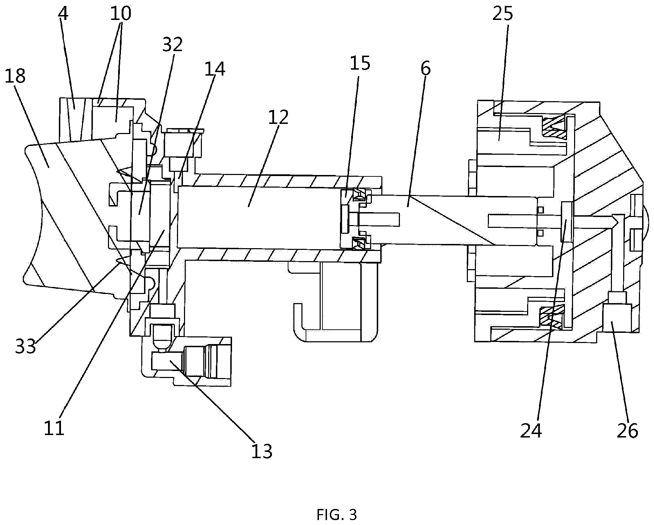

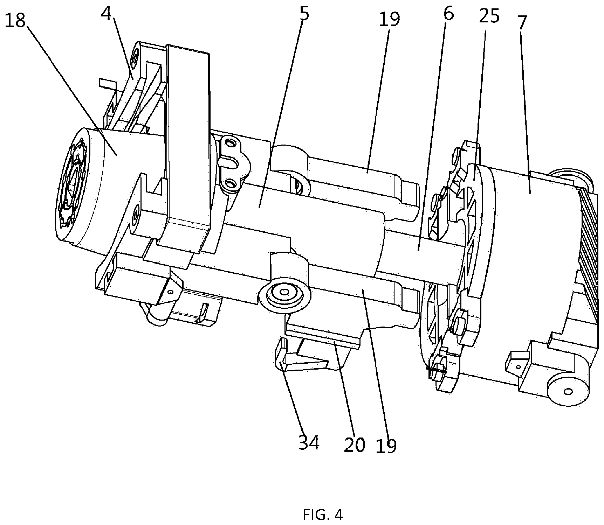

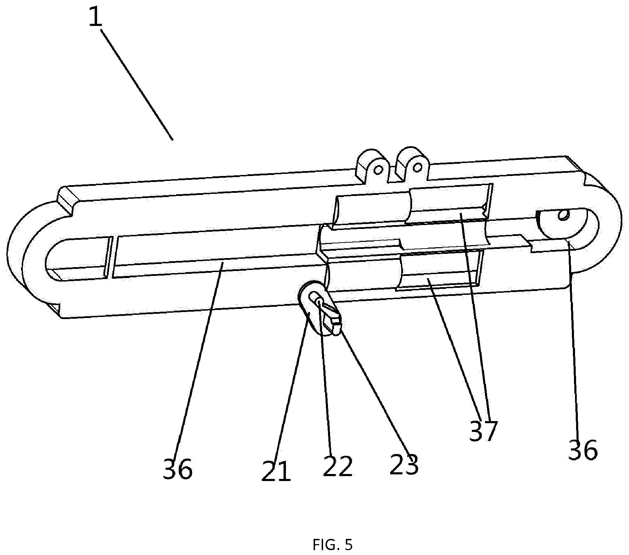

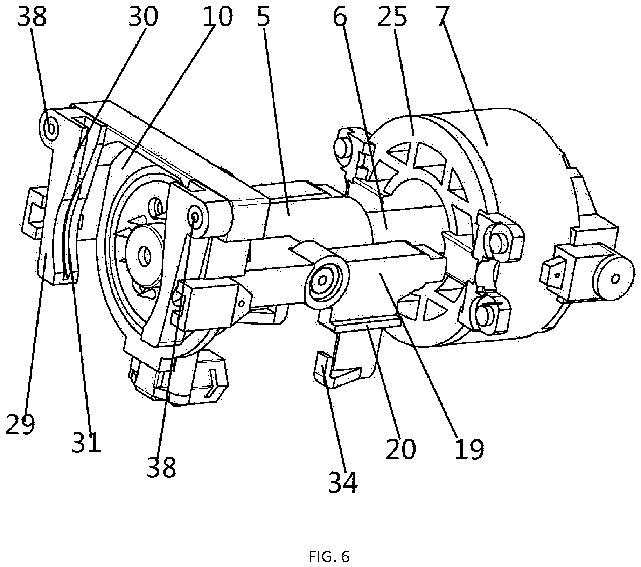

As shown in Figs. 1-6, the automatic compressing, rejecting and brewing device for capsule coffeemakers comprises brackets arranged in parallel; a capsule container 3, a capsule clamping assembly 4 and a compression mechanism are successively provided between the brackets 1; each of the brackets 1 is provided with a spring assembly connected to the compression mechanism; the compression mechanism comprises a first piston compression assembly 5, a piston rod 6 and a second piston compression assembly 7, which are connected successively; the first piston compression assembly 5 comprises a sealed chamber 10, a hot water intake chamber 11, a first piston chamber 12 and a support rod assembly, which are connected successively; the sealed chamber 10 is communicated with the hot water intake chamber 11, and a hot water inlet 13 is formed on the hot water intake chamber 11; a first fluid inlet 14 is formed at one end of the first piston chamber 12, a first piston 15 connected to the piston rod 6 is provided inside the first piston chamber 12, and connecting shafts are pairwise provided at the other end of the first piston chamber 12; the support rod assembly comprises a first support rod 16 and a second support rod 17, each comprising a straight compression lever 19 and a rotary support block 20 arranged on one side of the straight compression lever 19; the connecting shafts are movably connected to the straight compression lever 19; each of the brackets 1 is provided with a rotary limiting mechanism 21 which comprises a limiting portion 22 and a rotating portion 23 connected together; during the movement of the first piston compression assembly 5 toward the capsule container 3, the rotating portion 23 of the rotary limiting mechanism 21 rotates the first support rod 1 and the second support rod 2 upward, and the limiting portion 22 of the rotary limiting mechanism 21 supports and limits the first support rod 16 and the second support rod 17; after the movement, the straight compression lever 19 is in parallel to the movement direction of the first piston compression assembly 5; and the second piston compression assembly 7 comprises a second piston chamber 24 and a second piston 25 provided in the second piston chamber 24, the second piston 25 is connected to the piston rod 6, and a second fluid inlet 26 is formed on the second piston chamber 24; and
the spring assembly comprises a first return spring 8 and a second return spring 9 arranged pairwise, one end of the first return spring 8 is connected to the first piston compression assembly 5 and the other end of the first return spring 8 is arranged on the brackets 1, one end of the second return spring 9 is connected to the second piston compression assembly 7 and the other end of the second return spring 9 is arranged on brackets 1.

Wherein, the capsule container 3 is fixedly connected to the brackets 1, the capsule clamping assembly 4 is fixedly connected to an end of the sealed chamber 10 of the first piston compression assembly 5, and the first return spring 8 is connected to the outer wall of the sealed chamber 10, the hot water intake chamber 11 or the first piston chamber 12 of the first piston compression assembly 5. To ensure the movement stability of the first piston compression assembly 5, a through groove is formed on the brackets 1, and a guide block matched with the through groove is provided on the outer wall of the sealed chamber 10, the hot water intake chamber 11 or the first piston chamber 12. Preferably, the guide block is connected to one end of the first return spring 8 and the other end of the first return spring 8 is arranged on the brackets 1; and the first return spring 8 and the second return spring 9 are placed in the first spring accommodating groove 36 and the second spring accommodating groove 37 on the brackets 1, respectively.

In the present invention, the first piston compression assembly 5, the piston rod 6 and the second piston compression assembly 7, which are connected together, are used, so that the capsule18 is automatically compressed by the coordination of the first piston compression assembly 5 and the second piston compression assembly 7 and the compression speed and the movement stability are both improved. Wherein, the first piston compression assembly 5 moves toward the capsule container 3 under the pressure from the first fluid to compress a capsule 18 into the capsule container 3; the second piston 25 in the second piston compression assembly 7 pushes the piston rod 6 to move towards the capsule container 3 under the pressure from the second fluid; and the second piston 25 comes into contact connection to the support rod assembly in the first piston compression assembly 5 to further urge the first piston compression assembly 5 to compress the capsule 18. That is, the automatic compression of a capsule is completed by the coordination of the first piston 15 and the second piston 25. Meanwhile, since the presence of the first piston 15 and the support rod assembly shortens the movement distance of the second piston 25, the movement speed and the movement stability are improved. Furthermore, driving the piston by the first fluid and the second fluid can reuse the first fluid and the second fluid, so that the energy utilization is improved, and the use and manufacturing cost is reduced.

In the present invention, the capsule container 3 comprises a housing 27; an accommodating chamber 28, which is open to the outside, is provided at one end of the housing 27, and used for accommodating a coffee capsule 18; a number of sharp cones 33 are provided on the bottom of the accommodating chamber 28; and a through coffee outlet is formed at the other end of the housing 27. When the capsule 18 goes into the capsule container 3, first, it goes into the accommodating chamber 28, and then comes into contact with the sharp cones 33 on the bottom of the accommodating chamber 28 as it moves, where the sharp cones 33 pierces the capsule 18. Preferably, to be convenient for coffee to flow from the capsule 18, a flow channel is formed on each of the sharp cones 33. The coffee from the capsule is uniformly mixed in the capsule container 3 and flows out from the coffee outlet for drinking.

In the present invention, the capsule clamping assembly 4 is connected to the first piston compression assembly 5; the capsule clamping assembly 4 comprises two clampers, which are arranged symmetrically; the clamper comprises a clamper body 29 and a curved groove formed on one side of the clamper body 29, and the curved groove comprises a capsule sliding segment 30 and a capsule clamping segment 31; and the clamper body 29 is connected to the sealed chamber 10 of the first piston compression assembly 5. Wherein, an end of the capsule 18 with a skirt is placed into the capsule sliding segment 30 of the curved groove, the capsule 18 goes into the capsule clamping segment 31 below the capsule sliding segment 30, and the capsule 18 is clamped by the capsule clamping segments 31 of the two clampers to avoid the falling of the capsule 18. It is to be noted that the shortest distance between the two clampers, which are arranged symmetrically, is greater than or equal to the diameter of the capsule container 3, and that the distance between the two clampers, which are arranged symmetrically, is less than the diameter of the capsule skirt, so that a side of the clamper body 29 can come into contact with the skirt of the capsule 18 when the capsule clamping assembly 4 returns together with the first piston clamping assembly 5, to further separate the capsule 18 from the capsule container 3, to thus complete the automatic falling of the capsule 18. Preferably, the axis of symmetry of the two clampers, which are arranged symmetrically, and the axis of the capsule container 3 are in a same line.

To ensure the rotation of the two clampers relative to each other, and to avoid the problem of difficult separation of the capsule 18 because of the locking of the capsule skirt inside the curved groove when the capsule 18 is separated from the curved groove due to the constant distance between the clampers if the two clampers are fixedly connected to the sealed chamber 10, in the present invention, rotating shafts 38 are pairwise provided on the sealed chamber 10 and movably connected to an upper end of the clamper body 29, and a lower end of the clamper body 29 is connected to the sealed chamber 10 by a limiting spring. When the capsule 18 is separated from the curved groove, the capsule skirt applies an outward radial force (i.e., a radial force vertical to the axis of the two clampers) to the clamper body 29, so that the clamper body 29 rotates outward around the rotating shafts 38, the skirt of the capsule 18 is separated smoothly, the capsule goes into the capsule container 3 quickly, accurately and stably, and the capsule skirt is clamped and sealed by the sealed chamber 10 and the capsule container 3.

To improve the sealed performance between the sealed chamber 10 and the housing 27 of the capsule container 3 to avoid the leakage of coffee, in the present invention, an annular sealing member is provided on an inner wall of the sealed chamber 10, and an inner wall of the annular sealing member is connected to an outer wall of the housing 27 in a sealed manner.

In the present invention, a through hole 32 communicated with the hot water intake chamber intake 11 is formed on a bottom surface of the sealed chamber 10. Preferably, an extension tube (preferably, the extension tube has a tip or does not have a tip), having a diameter not less than the diameter of the through hole 32 so that the extension tube can be inserted into the capsule 18, is provided at the through hole 32; and a number of sharp cones 33 are uniformly distributed on the bottom surface of the sealed chamber 10 between the through hole 32 and the annular sealing member. Wherein, in the present invention, to be convenient for hot water to flow into the capsule 18 or for coffee to flow out from the capsule 18, central through holes or sidewall through holes are formed on the sharp cones 33 (sharp cones 33 on the bottom of the accommodating chamber 28 and on the bottom of the sealed chamber) so that hot water or coffee can flow into or out from the capsule from the central through holes or sidewall through holes.

In the present invention, each of the first support rod 16 and the second support rod 17 is provided with a rotary hook 34 which is connected to the rotary support block 20 by a connecting plate; during the return process of the first piston compression assembly 5, when the first support rod 16 and the second support rod 17 cannot rotate downward due to their own gravity, the rotary hook 34 is in contact connection to the rotating portion 23, and the rotary hook 34 enables the first support rod 16 and the second support rod 17 to rotate downward. That is, by providing a rotary hook 34 on each of the first support rod 16 and the second support rod 17, when the first support rod 16 and the second support rod 17 cannot rotate downward due to their own gravity, the rotary hook 34 is in contact connection to the rotating portion 23, and the rotary hook 34 enables the first support rod 16 and the second support rod 17 to rotate downward. The problem of unsuccessful return of the first piston compression assembly 5 because the first support rod 16 and the second support rod 17 cannot fall due to external factors is avoided, and the movement precision of the device is improved.

In the present invention, first fluid and second fluid are filled to the first piston chamber 12 and the second piston chamber 24 respectively by the first fluid inlet 14 and the second fluid inlet 26; and the first fluid and the second fluid are water or hydraulic oil.

The present invention further comprises an automatic compressing, rejecting and brewing method using the device described above, comprising the following steps:
a capsule 18 is placed into a capsule groove from the capsule sliding segment 30 of the two clampers of the capsule clamping assembly 4, and clamped by the capsule clamping segment 31;
first fluid is supplied into the first piston chamber 12 from the first fluid inlet 14 on the first piston chamber 12 in the first piston compression assembly 5, the first fluid drives the sealed chamber 10, the hot water intake chamber 11, the first piston chamber 12 and the support rod assembly in the first piston compression assembly 5 to move towards the capsule container 3 and drives the capsule 18 fixed in the capsule clamping assembly 4 to separate from the capsule groove to go into the capsule container 3, and now the support rod assembly movably connected to the first piston chamber 12 starts rotating under the effect of the rotary limiting mechanism 21, wherein the support rod assembly comprises a first support rod 16 and a second support rod 17, each comprising a straight compression lever 19 and a rotary support block 20 arranged on one side of the straight compression lever 19; the connecting shafts are movably connected to the straight compression lever 19; each of the brackets 1 is provided with a rotary limiting mechanism 21 which comprises a limiting portion 22 and a rotating portion 23 connected together; during the movement of the first piston compression assembly 5 toward the capsule container 3, the rotating portion 23 of the rotary limiting mechanism 21 rotates the first support rod 16 and the second support rod 17 upward, and the limiting portion 22 of the rotary limiting mechanism 21 supports and limits the first support rod 16 and the second support rod 17;

Second fluid is supplied into the second piston chamber 24 from the second fluid inlet 26 on the second piston chamber 24 in the second piston compression assembly 7, the second fluid drives the second piston 25 and the piston rod 6 to move towards the capsule container 3, the second piston 25 comes into contact with the straight compression lever 19 and compresses the straight compression lever 19 so that the sealed chamber 10 is in sealed connection to the capsule container 3, and the sharp cones 33 on the bottom of the sealed chamber 10 and on the bottom of the capsule container 3 pierce the capsule 18;

Hot water flows into the hot water intake chamber 11 from the hot water inlet 13 on the hot water intake chamber 11 in the first piston compression assembly 5, and into the sealed chamber 10, the capsule 18 and the capsule container 3, for making coffee;
at the end of making coffee, coffee flows out from the coffee outlet on the capsule container 3; when it is necessary to replace the capsule 18, second fluid inside the second piston chamber 24 is released and the second piston 25 is driven by the second return spring 9 to return to its original position, and the first fluid inside the first piston chamber 12 is released and the first piston compression assembly 5 is driven by the first return spring 8 to return to its original position, and during the return process, the support rod assembly in the first piston compression assembly 5 rotates downward under the gravity; and
the sealed chamber 10 is separated from the capsule container 3, the capsule 18 automatically falls, a new capsule 18 is placed in the capsule clamping assembly4, and the above steps are repeated.

In the present invention, during the return process of the first piston compression assembly 5 when driven by the first return spring 8, when the support rod assembly in the first piston compression assembly 5 cannot rotate downward due to its own gravity, the rotary hooks 34 are arranged on the first support rod 16 and the second support rod 17 and connected to the rotary support block 20 by a connecting plate. During the return process of the first piston compression assembly 5, the rotary hook 34 is in contact connection to the rotary portion 23, and the rotary hook 34 enables the first support rod 16 and the second support rod 17 to rotate downward.

Although the principle and implementations of the present invention have been described above by specific examples in the present invention, the foregoing description of the embodiments is merely for helping understand the method and core idea of the present invention. Meanwhile, various alterations to the specific implementations and applications may come to a person of ordinary skill in the art according to the concept of the present invention.

### LIST OF REFERENCES

- 1:: bracket;
- 2:: second bracket;
- 3:: capsule container;
- 4:: capsule clamping assembly;
- 5:: first piston compression assembly
- 6:: piston rod;
- 7:: second piston compression assembly;
- 8:: first return spring;
- 9:: second return spring;
- 10:: sealed chamber;
- 11:: hot water intake chamber;
- 12:: first piston chamber;
- 13:: hot water inlet;
- 14:: first fluid inlet;
- 15:: first piston;
- 16:: first support rod;
- 17:: second support rod;
- 18:: capsule;
- 19:: straight compression lever;
- 20:: rotary support block;
- 21:: rotary limiting mechanism;
- 22:: limiting portion;
- 23:: rotating portion;
- 24:: second piston chamber;
- 25:: second piston;
- 26:: second fluid inlet;
- 27:: housing;
- 28:: accommodating chamber;
- 29:: clamper body;
- 30:: capsule sliding segment;
- 31:: capsule clamping segment;
- 32:: through hole;
- 33:: sharp cone;
- 34:: rotary hook;
- 36:: first spring accommodating groove;
- 37:: second spring accommodating groove; and
- 38:: rotating shaft.

## Claims

1. An automatic compressing, rejecting and brewing device for capsule coffeemakers, comprising brackets (1) arranged in parallel; a capsule container (3), a capsule clamping assembly (4) and a compression mechanism are provided successively between the brackets (1), and a spring assembly connected to the compression mechanism is provided on each of the brackets (1); the compression mechanism comprises a first piston compression assembly (5), a piston rod (6) and a second piston compression assembly (7), which are connected successively; the first piston compression assembly (5) comprises a sealed chamber (10), a hot water intake chamber (11), a first piston chamber (12) and a support rod assembly, which are connected successively; the sealed chamber (10) is communicated with the hot water intake chamber (11), and a hot water inlet (13) is formed on the hot water intake chamber (11); a first fluid inlet (14) is formed at one end of the first piston (15) chamber (12), a first piston (15) connected to the piston rod (6) is provided inside the first piston chamber (12), and connecting shafts are pairwise provided at the other end of the first piston chamber (12); wherein the support rod assembly comprises a first support rod (16) and a second support rod (17), each comprising a straight compression lever (19) and a rotary support block (20) arranged on one side of the straight compression lever (19); **characterized in that**
the connecting shafts are movably connected to the straight compression lever (19); each of the brackets (1) is provided with a rotary limiting mechanism (21) which comprises a limiting portion (22) and a rotating portion (23) connected together; during the movement of the first piston compression assembly (5) toward the capsule container (3), the rotating portion (23) of the rotary limiting mechanism (21) rotates the first support rod (16) and the second support rod (17) upward, and the limiting portion (22) of the rotary limiting mechanism (21) supports and limits the first support rod (16) and the second support rod (17); after the movement, the straight compression lever (19) is in parallel to the movement direction of the first piston compression assembly (5); and the second piston compression assembly (7) comprises a second piston chamber (24) and a second piston (25) provided in the second piston chamber (24), the second piston (25) is connected to the piston rod (6), and a second fluid inlet is formed on the second piston chamber (24); and
the spring assembly comprises a first return spring (8) and a second return spring (9) arranged pairwise, one end of the first return spring (8) is connected to the first piston compression assembly (5) and the other end of the first return spring (8) is arranged on the brackets (1), one end of the second return spring (9) is connected to the second piston compression assembly (7) and the other end of the second return spring (9) is arranged on the brackets (1).

2. The automatic compressing, rejecting and brewing device for capsule coffeemakers according to claim 1, wherein the capsule container (3) comprises a housing (27); an accommodating chamber (28), which is open to the outside, is provided at one end of the housing (27), and used for accommodating a coffee capsule (18); a number of sharp cones (33) are provided on the bottom of the accommodating chamber (28); and a through coffee outlet is formed at the other end of the housing (27).

3. The automatic compressing, rejecting and brewing device for capsule coffeemakers according to claim 2, wherein the capsule jaw assembly is connected to the first piston compression assembly (5); the capsule jaw assembly comprises two jaws, which are arranged symmetrically; the jaw comprises a jaw body and a curved groove formed on one side of the jaw body, and the curved groove comprises a capsule sliding segment (30) and a capsule clamping segment (31); and the jaw body is connected to the sealed chamber (10) of the first piston compression assembly (5).

4. The automatic compressing, rejecting and brewing device for capsule coffeemakers according to claim 3, wherein rotating shafts (38) are pairwise provided on the sealed chamber (10) and movably connected to an upper end of the clamper body (29), and a lower end of the clamper body (29) is connected to the sealed chamber (10) by a limiting spring.

5. The automatic compressing, rejecting and brewing device for capsule coffeemakers according to claim 1, wherein an annular sealing member is provided on an inner wall of the sealed chamber (10), and an inner wall of the annular sealing member is connected to an outer wall of the housing (27) in a sealed manner.

6. The automatic compressing, rejecting and brewing device for capsule coffeemakers according to claim 5, wherein a through hole (32) communicated with the hot water intake chamber (11) is formed on a bottom surface of the sealed chamber (10), and a number of sharp cones (33) are uniformly distributed on the bottom surface of the sealed chamber (10) between the through hole (32) and the annular sealing member.

7. The automatic compressing, rejecting and brewing device for capsule coffeemakers according to claim 1, wherein each of the first support rod (16) and the second support rod (17) is provided with a rotary hook (34) which is connected to the rotary support block (20) by a connecting plate; during the return process of the first piston compression assembly (5), when the first support rod (16) and the second support rod (17) cannot rotate downward due to their own gravity, the rotary hook (34) is in contact connection to the rotating portion (23), and the rotary hook (34) enables the first support rod (16) and the second support rod (17) to rotate downward.

8. The automatic compressing, rejecting and brewing device for capsule coffeemakers according to claim 1, wherein first fluid and second fluid are filled to the first piston chamber (12) and the second piston chamber (24) respectively by the first fluid inlet (14) and the second fluid inlet; and the first fluid and the second fluid are water or hydraulic oil.

9. An automatic compressing, rejecting and brewing method for capsule coffeemakers, comprising the steps:
a capsule (18) is placed into a capsule groove from a capsule sliding segment (30) of two clampers of a capsule clamping assembly (4), and clamped by a capsule clamping segment (31);
first fluid is supplied into a first piston chamber (12) from a first fluid inlet (14) on the first piston chamber (12) in a first piston compression assembly (5), the first fluid drives a sealed chamber (10), a hot water intake chamber (11), the first piston chamber (12) and a support rod assembly in the first piston compression assembly (5) to move towards a capsule container (3) and drives the capsule (18) fixed in a capsule clamping assembly (4) to separate from the capsule groove to go into the capsule container (3), **characterized in that** it furthermore comprises the following steps: now the support rod assembly movably connected to the first piston chamber (12) starts rotating under the effect of a rotary limiting mechanism (21), wherein the support rod assembly comprises a first support rod (16) and a second support rod (17), each comprising a straight compression lever and a rotary support block (20) arranged on one side of the straight compression lever (19); the connecting shafts are movably connected to the straight compression lever (19); each of the brackets (1) is provided with a rotary limiting mechanism (21) which comprises a limiting portion (22) and a rotating portion (23) connected together; during the movement of the first piston compression assembly (5) toward the capsule container (3), the rotating portion (23) of the rotary limiting mechanism (21) rotates the first support rod (16) and the second support rod (17) upward, and the limiting portion (22) of the rotary limiting mechanism (21) supports and limits the first support rod (16) and the second support rod (17);
second fluid is supplied into a second piston chamber (24) from a second fluid inlet on the second piston chamber (24) in a second piston compression assembly (7), the second fluid drives a second piston (25) and a piston rod (6) to move towards the capsule container (3), the second piston (25) comes into contact with the straight compression lever (19) and compresses the straight compression lever (19) so that the sealed chamber (10) is in sealed connection to the capsule container (3), and sharp cones (33) on the bottom of the sealed chamber (10) and on the bottom of the capsule container (3) pierce the capsule (18);
hot water flows into the hot water intake chamber (11) from a hot water inlet (13) on a hot water intake chamber (11) in the first piston compression assembly (5), and into the sealed chamber (10), the capsule (18) and the capsule container (3), for making coffee;
at the end of making coffee, coffee flows out from a coffee outlet on the capsule container (3); when it is necessary to replace the capsule (18), second fluid inside the second piston chamber (24) is released and the second piston (25) is driven by a second return spring (9) to return to its original position, and the first fluid inside the first piston chamber (12) is released and the first piston compression assembly (5) is driven by a first return spring (8) to return to its original position, and during the return process, the support rod assembly in the first piston compression assembly (5) rotates downward under the gravity; and
the sealed chamber (10) is separated from the capsule container (3), the capsule (18) automatically falls, a new capsule (18) is placed in the capsule clamping assembly (4), and the above steps are repeated.

10. The automatic compressing, rejecting and brewing method for capsule coffeemakers according to claim 9, wherein, during the return process of the first piston compression assembly (5) when driven by the first return spring (8), when the support rod assembly in the first piston compression assembly (5) cannot rotate downward due to its own gravity, rotary hooks (34) are arranged on the first support rod (16) and the second support rod (17) and connected to the rotary support block (20) by a connecting plate, so that, during the return process of the first piston compression assembly (5), the rotary hook (34) is in contact connection to the rotary portion, and the rotary hook (34) enables the first support rod (16) and the second support rod (17) to rotate downward.

## Patentansprüche

1. Automatische Kompressions-, Ausstoß- und Brühvorrichtung für Kapselkaffeemaschinen, die parallel angeordnete Halterungen (1) umfasst; ein Kapselbehälter (3), eine Kapselklemmanordnung (4) und ein Kompressionsmechanismus sind aufeinanderfolgend zwischen den Halterungen (1) bereitgestellt, und eine mit dem Kompressionsmechanismus verbundene Federanordnung ist an jeder der Halterungen (1) bereitgestellt; der Kompressionsmechanismus umfasst eine erste Kolbenkompressionsanordnung (5), eine Kolbenstange (6) und eine zweite Kolbenkompressionsanordnung (7), die aufeinanderfolgend verbunden sind; die erste Kolbenkompressionsanordnung (5) umfasst eine abgedichtete Kammer (10), eine Heißwassereinlasskammer (11), eine erste Kolbenkammer (12) und eine Stützstangenanordnung, die aufeinanderfolgend verbunden sind; die abgedichtete Kammer (10) steht mit der Heißwassereinlasskammer (11) in Verbindung, und ein Heißwassereinlass (13) ist an der Heißwassereinlasskammer (11) ausgebildet; ein erster Fluideinlass (14) ist an einem Ende der ersten Kolbenkammer (12) ausgebildet, ein erster Kolben (15), der mit der Kolbenstange (6) verbunden ist, ist innerhalb der ersten Kolbenkammer (12) vorgesehen und Verbindungswellen sind paarweise an dem anderen Ende der ersten Kolbenkammer (12) bereitgestellt;
wobei die Stützstangenanordnung eine erste Stützstange (16) und eine zweite Stützstange (17) umfasst, die jeweils einen geraden Kompressionshebel (19) und einen drehbaren Stützblock (20) umfassen, der auf einer Seite des geraden Kompressionshebels (19) angeordnet ist;
**dadurch gekennzeichnet, dass**
die Verbindungswellen beweglich mit dem geraden Kompressionshebel (19) verbunden sind; jede der Halterungen (1) mit einem Drehbegrenzungsmechanismus (21) versehen ist, der einen Begrenzungsabschnitt (22) und einen Drehabschnitt (23) umfasst, die miteinander verbunden sind, während der Bewegung der ersten Kolbenkompressionsanordnung (5) in Richtung des Kapselbehälters (3) der Drehabschnitt (23) des Drehbegrenzungsmechanismus (21) die erste Stützstange (16) und die zweite Stützstange (17) nach oben dreht, und der Begrenzungsabschnitt (22) des Drehbegrenzungsmechanismus (21) die erste Stützstange (16) und die zweite Stützstange (17) stützt und begrenzt; nach der Bewegung der gerade Kompressionshebel (19) parallel zur Bewegungsrichtung der ersten Kolbenkompressionsanordnung (5) ist; und die zweite Kolbenkompressionsanordnung (7) eine zweite Kolbenkammer (24) und einen zweiten Kolben (25) umfasst, der in der zweiten Kolbenkammer (24) bereitgestellt ist, wobei der zweite Kolben (25) mit der Kolbenstange (6) verbunden ist und ein zweiter Fluideinlass an der zweiten Kolbenkammer (24) ausgebildet ist; und die Federanordnung eine erste Rückstellfeder (8) und eine zweite Rückstellfeder (9) umfasst, die paarweise angeordnet sind, wobei ein Ende der ersten Rückstellfeder (8) mit der ersten Kolbenkompressionsanordnung (5) verbunden ist und das andere Ende der ersten Rückstellfeder (8) an den Halterungen (1) angeordnet ist, wobei ein Ende der zweiten Rückstellfeder (9) mit der zweiten Kolbenkompressionsanordnung (7) verbunden ist und das andere Ende der zweiten Rückstellfeder (9) an den Halterungen (1) angeordnet ist.

2. Automatische Kompressions-, Ausstoß- und Brühvorrichtung für Kapselkaffeemaschinen nach Anspruch 1, wobei der Kapselbehälter (3) ein Gehäuse (27) umfasst; an einem Ende des Gehäuses (27) eine nach außen offene Aufnahmekammer (28) zur Aufnahme einer Kaffeekapsel (18) vorgesehen ist; am Boden der Aufnahmekammer (28) eine Anzahl scharfer Kegel (33) bereitgestellt ist; und am anderen Ende des Gehäuses (27) ein Durchgangskaffeeauslass ausgebildet ist.

3. Automatische Kompressions-, Ausstoß- und Brühvorrichtung für Kapselkaffeemaschinen nach Anspruch 2, wobei eine Kapselbackenanordnung mit der ersten Kolbenkompressionsanordnung (5) verbunden ist; die Kapselbackenanordnung zwei Backen umfasst, die symmetrisch angeordnet sind; die Backe einen Backenkörper und eine gekrümmte Nut umfasst, die auf einer Seite des Backenkörpers ausgebildet ist, und die gekrümmte Nut ein Kapselgleitsegment (30) und ein Kapselklemmsegment (31) umfasst; und der Backenkörper mit der abgedichteten Kammer (10) der ersten Kolbenkompressionsanordnung (5) verbunden ist.

4. Automatische Kompressions-, Ausstoß- und Brühvorrichtung für Kapselkaffeemaschinen nach Anspruch 3, wobei an der abgedichteten Kammer (10) paarweise rotierende Wellen (38) bereitgestellt sind, die mit einem oberen Ende eines Klemmkörpers (29) beweglich verbunden sind, und ein unteres Ende des Klemmkörpers (29) über eine Begrenzungsfeder mit der abgedichteten Kammer (10) verbunden ist.

5. Automatische Kompressions-, Ausstoß- und Brühvorrichtung für Kapselkaffeemaschinen nach Anspruch 1, wobei an einer Innenwand der abgedichteten Kammer (10) ein ringförmiges Dichtungselement vorgesehen ist, und eine Innenwand des ringförmigen Dichtungselements mit einer Außenwand des Gehäuses (27) dicht verbunden ist.

6. Automatische Kompressions-, Ausstoß- und Brühvorrichtung für Kapselkaffeemaschinen nach Anspruch 5, wobei ein Durchgangsloch (32), das mit der Heißwassereinlasskammer (11) in Verbindung steht, auf einer Bodenfläche der abgedichteten Kammer (10) ausgebildet ist, und eine Anzahl von scharfen Kegeln (33) gleichmäßig auf der Bodenfläche der abgedichteten Kammer (10) zwischen dem Durchgangsloch (32) und dem ringförmigen Dichtungselement verteilt ist.

7. Automatische Kompressions-, Ausstoß- und Brühvorrichtung für Kapselkaffeemaschinen nach Anspruch 1, wobei die erste Stützstange (16) und die zweite Stützstange (17) jeweils mit einem Drehhaken (34) versehen sind, der über eine Verbindungsplatte mit dem Drehstützblock (20) verbunden ist; während eines Rückstellvorgangs der ersten Kolbenkompressionsanordnung (5), wenn die erste Stützstange (16) und die zweite Stützstange (17) aufgrund ihrer eigenen Schwerkraft nicht nach unten rotieren können, der Drehhaken (34) in Kontaktverbindung mit dem Drehabschnitt (23) steht, und der Drehhaken (34) es der ersten Stützstange (16) und der zweiten Stützstange (17) ermöglicht, nach unten zu rotieren.

8. Automatische Kompressions-, Ausstoß- und Brühvorrichtung für Kapselkaffeemaschinen nach Anspruch 1, wobei ein erstes Fluid und ein zweites Fluid durch den ersten Fluideinlass (14) und den zweiten Fluideinlass in die erste Kolbenkammer (12) bzw. die zweite Kolbenkammer (24) eingefüllt werden; und das erste Fluid und das zweite Fluid Wasser oder Hydrauliköl sind.

9. Automatisches Kompressions-, Ausstoß- und Brühverfahren für Kapselkaffeemaschinen, umfassend die Schritte:
eine Kapsel (18) wird von einem Kapselgleitsegment (30) zweier Klemmer einer Kapselklemmanordnung (4) in eine Kapselnut eingelegt und durch ein Kapselklemmsegment (31) geklemmt;
ein erstes Fluid wird in eine erste Kolbenkammer (12) von einem ersten Fluideinlass (14) an der ersten Kolbenkammer (12) in einer ersten Kolbenkompressionsanordnung (5) zugeführt, wobei das erste Fluid eine abgedichtete Kammer (10), eine Heißwassereinlasskammer (11), die erste Kolbenkammer (12) und eine Stützstangenanordnung in der ersten Kolbenkompressionsanordnung (5) antreibt, um sich in Richtung eines Kapselbehälters (3) zu bewegen, und die in einer Kapselklemmanordnung (4) befestigte Kapsel (18) antreibt, um sich von der Kapselnut zu trennen, um in den Kapselbehälter (3) zu gehen, **dadurch gekennzeichnet, dass** es weiterhin die folgenden Schritte umfasst: die mit der ersten Kolbenkammer (12) beweglich verbundene Stützstangenanordnung beginnt nun sich unter der Wirkung eines Drehbegrenzungsmechanismus (21) zu drehen, wobei die Stützstangenanordnung eine erste Stützstange (16) und eine zweite Stützstange (17) umfasst, die jeweils einen geraden Kompressionshebel und einen auf einer Seite des geraden Kompressionshebels (19) angeordneten Drehstützblock (20) umfassen; die Verbindungswellen beweglich mit dem geraden Kompressionshebel (19) verbunden sind; jede der Halterungen (1) mit einem Drehbegrenzungsmechanismus (21) versehen ist, der einen Begrenzungsabschnitt (22) und einen Drehabschnitt (23) umfasst, die miteinander verbunden sind; während der Bewegung der ersten Kolbenkompressionsanordnung (5) in Richtung des Kapselbehälters (3) dreht der Drehabschnitt (23) des Drehbegrenzungsmechanismus (21) die erste Stützstange (16) und die zweite Stützstange (17) nach oben, und der Begrenzungsabschnitt (22) des Drehbegrenzungsmechanismus (21) stützt und begrenzt die erste Stützstange (16) und die zweite Stützstange (17); ein zweites Fluid wird in eine zweite Kolbenkammer (24) von einem zweiten Fluideinlass an der zweiten Kolbenkammer (24) in einer zweiten Kolbenkompressionsanordnung (7) geführt, wobei das zweite Fluid einen zweiten Kolben (25) und eine Kolbenstange (6) antreibt, um sich in Richtung des Kapselbehälters (3) zu bewegen, der zweite Kolben (25) mit dem geraden Kompressionshebel (19) in Kontakt kommt und den geraden Kompressionshebel (19) zusammendrückt, so dass die abgedichtete Kammer (10) in abgedichteter Verbindung mit dem Kapselbehälter (3) steht, und scharfe Kegel (33) am Boden der abgedichteten Kammer (10) und am Boden des Kapselbehälters (3) die Kapsel (18) durchstoßen; heißes Wasser fließt in die Heißwassereinlasskammer (11) von einem Heißwassereinlass (13) an einer Heißwassereinlasskammer (11) in der ersten Kolbenkompressionsanordnung (5) und in die abgedichtete Kammer (10), die Kapsel (18) und den Kapselbehälter (3), um Kaffee zuzubereiten; am Ende der Kaffeezubereitung fließt Kaffee aus einem Kaffeeauslass an dem Kapselbehälter (3) aus; wenn es notwendig ist, die Kapsel (18) zu ersetzen, das zweite Fluid wird im Inneren der zweiten Kolbenkammer (24) freigegeben und der zweite Kolben (25) wird durch eine zweite Rückstellfeder (9) angetrieben, um in seine ursprüngliche Position zurückzukehren, und das erste Fluid wird im Inneren der ersten Kolbenkammer (12) freigegeben und die erste Kolbenkompressionsanordnung (5) wird durch eine erste Rückstellfeder (8) angetrieben, um in ihre ursprüngliche Position zurückzukehren, und während des Rückstellvorgangs dreht sich die Stützstabanordnung in der ersten Kolbenkompressionsanordnung (5) unter der Schwerkraft nach unten; und die abgedichtete Kammer (10) wird von dem Kapselbehälter (3) getrennt, die Kapsel (18) fällt automatisch, eine neue Kapsel (18) wird in die Kapselklemmeinheit (4) eingesetzt und die obigen Schritte werden wiederholt.

10. Automatisches Kompressions-, Ausstoß- und Brühverfahren für Kapselkaffeemaschinen nach Anspruch 9, wobei während des Rückstellvorgangs der ersten Kolbenkompressionsanordnung (5) bei Antrieb durch die erste Rückstellfeder (8), wenn die Stützstangenanordnung in der ersten Kolbenkompressionsanordnung (5) aufgrund ihrer eigenen Schwerkraft nicht nach unten rotieren kann, Drehhaken (34) an der ersten Stützstange (16) und der zweiten Stützstange (17) angeordnet und mit dem Drehstützblock (20) durch eine Verbindungsplatte verbunden werden, so dass während des Rückstellvorgangs der ersten Kolbenkompressionsanordnung (5) der Drehhaken (34) in Kontaktverbindung mit dem Drehabschnitt steht und der Drehhaken (34) der ersten Stützstange (16) und der zweiten Stützstange (17) ermöglicht, sich nach unten zu drehen.

## Revendications

1. Dispositif automatique de compression, de rejet et d'infusion pour cafetières à capsules, comprenant des supports (1) agencés en parallèle; un contenant de capsule (3), un ensemble de serrage de capsule (4) et un mécanisme de compression sont prévus successivement entre les supports (1), et un ensemble à ressorts connecté au mécanisme de compression est prévu sur chacun des supports (1) ; le mécanisme de compression comprend un premier ensemble de compression à piston (5), une tige de piston (6) et un second ensemble de compression à piston (7), qui sont reliés successivement ; le premier ensemble de compression à piston (5) comprend une chambre scellée (10), une chambre d'admission d'eau chaude (11), une première chambre de piston (12) et un ensemble de tiges de support, qui sont connectés successivement ; la chambre scellée (10) communique avec la chambre d'admission d'eau chaude (11), et une entrée d'eau chaude (13) est formée sur la chambre d'admission d'eau chaude (11) ; une première entrée de fluide (14) est formée au niveau d'une extrémité de la chambre (12) du premier piston (15), un premier piston (15) connecté à la tige de piston (6) est prévu à l'intérieur de la première chambre de piston (12), et des arbres de connexion sont prévus par paires à l'autre extrémité de la première chambre de piston (12) ; dans lequel
l'ensemble de tiges de support comprend une première tige de support (16) et une seconde tige de support (17), chacune comprenant un levier de compression droit (19) et un bloc de support rotatif (20) agencé sur un côté du levier de compression droit (19) ; **caractérisé en ce que**
les arbres de connexion sont connectés de manière mobile au levier de compression droit (19) ; chacun des supports (1) est pourvu d'un mécanisme de limitation rotatif (21) qui comprend une partie de limitation (22) et une partie rotative (23) connectées ensemble ; pendant le déplacement du premier ensemble de compression à piston (5) vers le contenant de capsule (3), la partie rotative (23) du mécanisme de limitation rotatif (21) fait tourner la première tige de support (16) et la seconde tige de support (17) vers le haut, et la partie de limitation (22) du mécanisme de limitation rotatif (21) supporte et limite la première tige de support (16) et la seconde tige de support (17) ; après le déplacement, le levier de compression droit (19) est parallèle à la direction de déplacement du premier ensemble de compression à piston (5) ; et le second ensemble de compression à piston (7) comprend une seconde chambre de piston (24) et un second piston (25) prévus dans la seconde chambre de piston (24), le second piston (25) est connecté à la tige de piston (6), et une seconde entrée de fluide est formée sur la seconde chambre de piston (24) ; et
l'ensemble à ressorts comprend un premier ressort de rappel (8) et un second ressort de rappel (9) agencés par paires, une extrémité du premier ressort de rappel (8) est connectée au premier ensemble de compression à piston (5) et l'autre extrémité du premier ressort de rappel (8) est agencée sur les supports (1), une extrémité du second ressort de rappel (9) est connectée au second ensemble de compression à piston (7) et l'autre extrémité du second ressort de rappel (9) est agencée sur les supports (1).

2. Dispositif automatique de compression, de rejet et d'infusion pour cafetières à capsules selon la revendication 1, dans lequel le contenant de capsule (3) comprend un logement (27) ; une chambre de réception (28), qui est ouverte vers l'extérieur, est prévue à une extrémité du logement (27) et utilisée pour loger une capsule de café (18) ; un certain nombre de cônes pointus (33) sont prévus sur le fond de la chambre de réception (28) ; et une sortie de café traversante est formée à l'autre extrémité du logement (27).

3. Dispositif automatique de compression, de rejet et d'infusion pour cafetières à capsules selon la revendication 2, dans lequel l'ensemble de mâchoires de capsule est connecté au premier ensemble de compression à piston (5) ; l'ensemble de mâchoires de capsule comprend deux mâchoires, qui sont agencées symétriquement ; la mâchoire comprend un corps de mâchoire et une rainure incurvée formée sur un côté du corps de mâchoire, et la rainure incurvée comprend un segment de coulissement de capsule (30) et un segment de serrage de capsule (31) ; et le corps de mâchoire est connecté à la chambre scellée (10) du premier ensemble de compression à piston (5).

4. Dispositif automatique de compression, de rejet et d'infusion pour cafetières à capsules selon la revendication 3, dans lequel des arbres rotatifs (38) sont prévus par paire sur la chambre scellée (10) et connectés de manière mobile à une extrémité supérieure du corps de dispositif de serrage (29), et une extrémité inférieure du corps de dispositif de serrage (29) est connectée à la chambre scellée (10) par un ressort de limitation.

5. Dispositif automatique de compression, de rejet et d'infusion pour cafetières à capsules selon la revendication 1, dans lequel un élément d'étanchéité annulaire est prévu sur une paroi intérieure de la chambre scellée (10), et une paroi intérieure de l'élément d'étanchéité annulaire est connectée à une paroi extérieure du logement (27) d'une manière étanche.

6. Dispositif automatique de compression, de rejet et d'infusion pour cafetières à capsules selon la revendication 5, dans lequel un trou traversant (32) communiquant avec la chambre d'admission d'eau chaude (11) est formé sur une surface inférieure de la chambre scellée (10), et un certain nombre de cônes pointus (33) sont répartis de manière uniforme sur la surface inférieure de la chambre scellée (10) entre le trou traversant (32) et l'élément d'étanchéité annulaire.

7. Dispositif automatique de compression, de rejet et d'infusion pour cafetières à capsules selon la revendication 1, dans lequel chacune de la première tige de support (16) et de la seconde tige de support (17) est pourvue d'un crochet rotatif (34) qui est connecté au bloc de support rotatif (20) par une plaque de connexion ; pendant le processus de retour du premier ensemble de compression à piston (5), lorsque la première tige de support (16) et la seconde tige de support (17) ne peuvent pas tourner vers le bas en raison de leur propre gravité, le crochet rotatif (34) est connecté en contact avec la partie rotative (23), et le crochet rotatif (34) permet à la première tige de support (16) et à la seconde tige de support (17) de tourner vers le bas.

8. Dispositif automatique de compression, de rejet et d'infusion pour cafetières à capsules selon la revendication 1, dans lequel le premier fluide et le second fluide sont versés vers la première chambre de piston (12) et la seconde chambre de piston (24) respectivement par la première entrée de fluide (14) et la seconde entrée de fluide ; et le premier fluide et le second fluide sont de l'eau ou de l'huile hydraulique.

9. Procédé automatique de compression, de rejet et d'infusion pour des cafetières à capsules, comprenant les étapes suivantes :
une capsule (18) est placée dans une rainure de capsule à partir d'un segment de coulissement de capsule (30) de deux dispositifs de serrage d'un ensemble de serrage de capsule (4), et serrée par un segment de serrage de capsule (31) ;
un premier fluide est fourni dans une première chambre de piston (12) à partir d'une première entrée de fluide (14) sur la première chambre de piston (12) d'un premier ensemble de compression à piston (5), le premier fluide amène une chambre scellée (10), une chambre d'admission d'eau chaude (11), la première chambre de piston (12) et un ensemble de tiges de support du premier ensemble de compression à piston (5) à se déplacer vers un contenant de capsule (3) et amène la capsule (18) fixée dans un ensemble de serrage de capsule (4) à se séparer de la rainure de capsule pour aller dans le contenant de capsule (3), **caractérisé en ce qu'**il comprend en outre les étapes suivantes : l'ensemble de tiges de support connecté de manière mobile à la première chambre de piston (12) commence à tourner sous l'effet d'un mécanisme de limitation rotatif (21), dans lequel l'ensemble de tiges de support comprend une première tige de support (16) et une seconde tige de support (17), chacune comprenant un levier de compression droit et un bloc de support rotatif (20) agencé sur un côté du levier de compression droit (19) ; les arbres de connexion sont connectés de manière mobile au levier de compression droit (19) ; chacun des supports (1) est pourvu d'un mécanisme de limitation rotatif (21) qui comprend une partie de limitation (22) et une partie rotative (23) connectées ensemble ; pendant le déplacement du premier ensemble de compression à piston (5) vers le contenant de capsule (3), la partie rotative (23) du mécanisme de limitation rotatif (21) fait tourner la première tige de support (16) et la seconde tige de support (17) vers le haut, et la partie de limitation (22) du mécanisme de limitation rotatif (21) supporte et limite la première tige de support (16) et la seconde tige de support (17) ;
un second fluide est fourni dans une seconde chambre de piston (24) à partir d'une seconde entrée de fluide sur la seconde chambre de piston (24) d'un second ensemble de compression à piston (7), le second fluide amène un second piston (25) et une tige de piston (6) à se déplacer vers le contenant de capsule (3), le second piston (25) vient en contact avec le levier de compression droit (19) et comprime le levier de compression droit (19) de façon telle que la chambre scellée (10) est en connexion scellée avec le contenant de capsule (3), et des cônes pointus (33) sur le fond de la chambre scellée (10) et sur le fond du contenant de capsule (3) percent la capsule (18) ;
de l'eau chaude s'écoule dans la chambre d'admission d'eau chaude (11) à partir d'une entrée d'eau chaude (13) sur une chambre d'admission d'eau chaude (11) du premier ensemble de compression à piston (5), et jusque dans la chambre scellée (10), la capsule (18) et le contenant de capsule (3), pour faire du café ;
lorsque le café est prêt, le café s'écoule vers l'extérieur à partir d'une sortie de café sur le contenant de capsule (3) ; lorsqu'il est nécessaire de remplacer la capsule (18), le second fluide à l'intérieur de la seconde chambre de piston (24) est libéré et le second piston (25) est entraîné par un second ressort de rappel (9) pour revenir dans sa position d'origine, et le premier fluide à l'intérieur de la première chambre de piston (12) est libéré et le premier ensemble de compression à piston (5) est entraîné par un premier ressort de rappel (8) pour revenir dans sa position d'origine, et pendant le processus de rappel, l'ensemble de tiges de support du premier ensemble de compression à piston (5) tourne vers le bas sous l'effet de la gravité ; et
la chambre scellée (10) est séparée du contenant de capsule (3), la capsule (18) tombe automatiquement, une nouvelle capsule (18) est placée dans l'ensemble de serrage de capsule (4), et les étapes ci-avant sont répétées.

10. Procédé automatique de compression, de rejet et d'infusion pour cafetières à capsules selon la revendication 9, dans lequel, pendant le processus de retour du premier ensemble de compression à piston (5) lorsqu'il est entraîné par le premier ressort de rappel (8), lorsque l'ensemble de tiges de support du premier ensemble de compression à piston (5) ne peut pas tourner vers le bas en raison de sa propre gravité, des crochets rotatifs (34) sont agencés sur la première tige de support (16) et la seconde tige de support (17) et connectés au bloc de support rotatif (20) par une plaque de connexion, de sorte que, pendant le processus de retour du premier ensemble de compression à piston (5), le crochet rotatif (34) est connecté en contact avec la partie rotative, et le crochet rotatif (34) permet à la première tige de support (16) et à la seconde tige de support (17) de tourner vers le bas.
